# EUROPÄISCHE PATENTSCHRIFT

(11) **EP 4 014 799 B1**
(45) Veröffentlichungstag und Bekanntmachung des Hinweises auf die Patenterteilung: **02.08.2023**
(21) Anmeldenummer: 21211309.6
(22) Anmeldetag: 30.11.2021
(51) Int. Cl.: A47J 31/00, A47J 31/42, A47J 31/52

(54) **HEISSGETRÄNKEBEREITER MIT BEDIEN-UND ANZEIGEVORRICHTUNG**
HOT BEVERAGE MAKER WITH OPERATING AND DISPLAY DEVICE
MACHINE À BOISSON CHAUDE AVEC DISPOSITIF DE FONCTIONNEMENT ET D'AFFICHAGE

(30) Priorität: 17.12.2020 BE 202005949
(43) Veröffentlichungstag der Anmeldung: 22.06.2022
(73) Patentinhaber: Miele & Cie. KG, 33332 Gütersloh (DE)
(72) Erfinder: Paletta, Marlene, 33659 Bielefeld (DE); Schnelle, Axel, 33106 Paderborn (DE)

(56) Entgegenhaltungen:
- EP-A1- 3 167 775
- EP-A1- 3 182 869
- EP-A1- 3 409 149
- WO-A1-99/62015

## Beschreibung

Die Erfindung betrifft einen Heißgetränkebereiter mit einem Strömungsleitungssystem mit
- einer Wasserquelle;
- einer Brüheinheit, wobei die Brüheinheit eine Brühkammer zur Aufnahme von aufzubrühendem Brühgut und einer Einlassleitung zum Einlassen von Brühwasser in die Brühkammer,
- eine Heizeinrichtung zum Erhitzen des der Brühkammer zugeführten Wassers
- eine Pumpe, die dazu ausgebildet ist, das Wasser aus der Quelle zur Brühkammer zu fördern,
- eine Steuereinrichtung zur Aktivierung und Deaktivierung der genannten Aktoren zur Zubereitung eines ausgewählten Getränks,
- eine Bedien- und Anzeigevorrichtung mit einem berührempfindlichen Display, auf dem ein Auswahlbereich eines Parameters angezeigt und mittels einer Berührung oder Berührgeste innerhalb des Auswahlbereichs eine gewünschte Einstellung des Parameters erfolgen kann, wobei die Steuereinrichtung mit der Bedien- und Anzeigevorrichtung in Verbindung steht, um aufgrund der Auswahl das Getränk zuzubereiten, wobei die Steuereinrichtung dazu eingerichtet ist, die Pumpe, den Heizkörper und die Ventilanordnung zur Zubereitung des Getränks zu steuern in Abhängigkeit der eingestellten sensorischen Eigenschaften.

Eine derartige Kaffeemaschine ist aus der WO 2017/050968 A1 bekannt. Die bekannte Kaffeemaschine gehört zu denjenigen Kaffeemaschinen, die in der Lage sind, wenigstens zwei verschiedene Sorten Kaffeegetränk herzustellen und auszugeben; insbesondere sind dies Kaffeegetränke vom Filterkaffeetyp und Kaffeegetränke vom Espressotyp. Die beiden Kaffeegetränke unterscheiden sich neben der vorzugsweisen Verwendung verschiedener Sorten von Kaffeebohnen, durch einen unterschiedlichen Brühdruck, Ferner ist die Pumpe mit verschiedenen Durchflussraten einstellbar, die von dem Brühdruck abhängig sind. Hierbei wird in einem Brühvorgang mit einer ersten Durchflussrate begonnen und anhand eines erfassten Drucks in der Leitung eine zweite Durchflussrate eingestellt. Hierbei kann es jedoch vorkommen, dass die zuerst eingestellt Durchflussrate, die letztendlich als erste Ist-Größe herangezogen wird, nicht optimal für das aufzubrühende Pulver ist. Ferner sind hier noch nicht alle Eigenschaften des Pulvers hinreichend berücksichtigt, um ein optimales Brühergebnis zu erhalten.

Aus der DE 10 2014 011 20 A1 ist ein Kaffeevollautomat mit Aktoren zum Zubereiten eines Kaffeegetränks mit einer entsprechenden Steuereinrichtung bekannt. Die Steuereinrichtung ist dazu eingerichtet, aufgrund sensorischer Vorgaben die Brühparameter für die einzelnen Aktoren einzustellen. Das bedeutet, dass die Kaffeemenge, der Mahlgrad, die Wassertemperatur und der Pumpendruck entsprechend eingestellt wird, um die der Steuerung vorgegebenen Getränkeeigenschaften zu erhalten.

DE 10 2017 111 859 A1 ist ein Kaffeeautomat mit zumindest zwei Vorratsbehältern für verschiedene Kaffeesorten. Mittels einer Bedien- und Anzeigevorrichtung kann der Benutzer sensorische Eigenschaften für sein Brühgetränk vorgeben. Anhand dieser Vorgaben bestimmt die Steuereinrichtung ein Mischungsverhältnis und dosiert entsprechend dieser Parameter die Zutaten aus den Vorratsbehältern.

Die Druckschrift EP 3 182 869 A1 offenbart einen Heißgetränkebereiter gemäss dem Oberbegriff des Anspruchs 1.

Bei allen bekannten Maßnahmen wird jedoch nicht der mögliche Geschmacksumfang der verwendeten Kaffeebohne berücksichtigt. Dies führt dazu, dass nachträglich Justierungen der Brühparameter vorgenommen werden können. Der Benutzer erhält keine Informationen hinsichtlich der Möglichkeiten zur Geschmacksentfaltung.

Der Erfindung liegt somit die Aufgabe zu Grunde, einen Heißgetränkebereiter dahingehend weiterzubilden, dass eine Vielzahl von unterschiedlichen Brühgetränken benutzerdefiniert zubereitet werden können. Ferner soll dem Benutzer eine einfache bzw. übersichtliche Eingabemöglichkeit für die Getränkeparameter bereitgestellt werden.

Erfindungsgemäß wird unter anderem diese Aufgabe durch einen Heißgetränkebereiter mit den Merkmalen des unabhängigen Anspruchs 1 gelöst. Vorteilhafte Ausgestaltungen und Weiterbildungen der Erfindung ergeben sich aus den abhängigen Ansprüchen.

Ein mit der Erfindung erreichbarer Vorteil besteht darin, dass die geräteseitig oder steuerungsseitig voreingestellten Getränke hinsichtlich des Brühprozesses nahezu beliebig verändert oder nachjustiert werden können. Hierbei wird unter anderem der Durchfluss, der für das zu bereitende Getränk ein wesentlicher Parameter ist, manipuliert bzw. für die verwendete Bohnensorte optimal eingestellt. Ferner kann die Brühtemperatur, die Kaffeemenge und ggf. der Brühdruck entsprechend eingestellt werden. Der Anwender muss sich jedoch nicht mit den Brühparametern befassen, sondern kann sich intensiv mit den Getränkeparametern befassen, also seinem Getränk, damit dies seinen Wünschen entspricht.

Um diese Vorteile auf einfache Weise zu erreichen, ist die Bedien- und Anzeigevorrichtung dazu ausgebildet, zur Einstellung der Parameter ein Spinnennetzdiagramm als zur Anzeige von sensorischen Eigenschaften auf dem Display auszugeben, und eine Berührung oder Geste innerhalb der Umrandung des Spinnennetzdiagramms als Auswahl für die sensorische Eigenschaft zu erfassen. Als sensorische Eigenschaft kann auch der Koffeingehalt gelten. Das Spinnennetzdiagramm umfasst eine auf dem Display dargestellte Umrisslinie, die an Eckpunkten die maximal zu erreichenden Geschmacksparameter angibt. Die Fläche innerhalb der Umrisslinie gibt an, welche Geschmacksparameter als Zwischenwerte erreichbar sind und entsprechend durch den Benutzer ausgewählt werden können.

Die Steuereinrichtung steht hierzu mit der Bedien- und Anzeigevorrichtung in Datenverbindung oder Kommunikationsverbindung, um aufgrund der Auswahl das Getränk zuzubereiten, wobei die Steuereinrichtung dazu eingerichtet ist, die Pumpe, den Heizkörper und die Ventile zur Zubereitung des Getränks zu steuern in Abhängigkeit der eingestellten Geschmacksparameter, welche die sensorischen Eigenschaften des Getränks repräsentieren.

Das Spinnennetzdiagramm zeigt die zu erreichenden Geschmackseigenschaften als Extremwerte an. Diese Extremwerte sind ist wiederrum durch gezielt einzustellende Getränkeparameter, wie oben genannt, zu erreichen. Das Diagramm ist in einer einfachen Ausprägung nur für eine Bohnensorte oder einer festen Bohnenmischung (Blend) festgelegt. Das Spinnennetzdiagramm wird auf dem Display der Bedien-und Anzeigevorrichtung als Bild oder Symbol dargestellt oder in einer animierten bewegten Darstellung. Das Spinnennetzdiagramm kann auch als sogenannte Geschmackslandkarte bezeichnet werden, auf der jeder Punkt einer Geschmackseigenschaft in einer vorbestimmten Intensität entspricht. Auf dieser Landkarte des Geschmacksraums wird durch den Benutzer ein Punkt angewählt, der innerhalb der Umrisslinie liegen muss, damit dieses Ergebnis erreicht werden kann. Alle Flächen außerhalb der Umrisslinie können als Brühergebnis nicht erreicht werden.

In einer beispielhaften Ausführung ist die Steuereinrichtung dazu eingerichtet und programmiert, als Brühparameter die Durchflussgeschwindigkeit abhängig von Geschmackseigenschaften einzustellen. Mit diesen Angaben, die das gewünschte Geschmacksergebnis betreffen, wird die für das ausgewählte Geschmacksergebnis optimale oder vorbestimmte Durchflussgeschwindigkeit eingestellt. Bevorzugt sind für die Auswahl Durchflussgeschwindigkeiten vorgesehen, die im Bereich von 0,5 ml/Sek. bis 8 ml/Sek. liegen. Die Auswahl geschieht dabei bevorzugt in Stufen, kann aber auch in sehr kleinen Stufen und damit quasi kontinuierlich erfolgen. Die anhand der Vorgaben ausgewählte oder bestimmte Durchflussgeschwindigkeit wird für den gesamten Brühprozess aufrechterhalten bzw. als Sollwert für eine Regelung beibehalten. In einer etwas einfacheren Ausgestaltung der Erfindung beträgt die einstellbare Bandbreite für die Durchflussgeschwindigkeit der Pumpe 1 ml/s bis 8 ml/s. Ferner kann die Durchflussgeschwindigkeit für die Zubereitung des ausgesuchten Getränks variieren, beispielsweise pulsieren oder nach einem vorbestimmten Profil. Ferner kann es vorteilhaft sein, den Brühdruck auf die ausgewählten Getränkeparameter entsprechend einzustellen, wobei hierzu ein einstellbares Brühventil am Fluidausgang der Brühkammer vorgesehen ist. Ferner kann die Brühtemperatur, also die Heizeinrichtung entsprechend der Vorgabe gesteuert werden.

In einer Ausführung des Heißgetränkebereiters mit einem Mahlwerk zum Mahlen von Kaffeebohnen, um das Kaffeepulver der Brühkammer zuzuführen, kann der Mahlgrad von der Steuereinrichtung verändert bzw. eingestellt werden. Hierbei ist bevorzugt die Steuereinrichtung ferner dazu eingerichtet, den Mahlgrad abhängig von den durch den Benutzer vorgegebenen sensorischen Eigenschaften einzustellen.

Insgesamt ist die Bedien- und Anzeigevorrichtung dazu ausgebildet, mit dem Spinnennetzdiagramm die zu erreichenden Grenzen hinsichtlich vorbestimmter Geschmacksparameter für eine zu verwendetet Bohnensorte anzuzeigen, innerhalb derer die Auswahl der Geschmacksparameter erfolgen kann für die nachfolgende Zubereitung des so spezifizierten Getränks.

In einer insgesamt zweckmäßigen Ausführung ist die Bedien- und Anzeigevorrichtung dazu eingerichtet oder programmiert, das Spinnennetzdiagramm als Fläche auf dem Display darzustellen, um eine Benutzereingabe für einen ersten Parameter in X- Richtung und einen weiteren Parameter in Y-Richtung bereitzustellen. In der aufgespannten Fläche der beiden Koordinaten bestimmt der Ort, auf dem die Berührung durch den Benutzer erfolgt, die entsprechende Intensität des Parameters.

In einer bevorzugten Weiterbildung ist die Bedien- und Anzeigevorrichtung dazu eingerichtet ist, das Spinnennetzdiagramm als Räumliches Diagramm, zusätzlich weitere Parameter in Z-Richtung darzustellen, um einen dritten Parameter in Z-Richtung zu konfigurieren. Das Diagramm wird zwar auf der Ebene des Displays ausgeben, jedoch als 3-D-Darstellung, wobei der räumliche Eindruck mit grafischen Effekten erreicht wird. Mit Wischgesten kann eine Animation bewirkt werden, die eine Verdrehung des räumlichen Diagramms bewirkt und so eine Auswahl in der zusätzlichen Raumachse Z bezüglich einer der anderen beiden Achsen bereitstellt.

In einer insgesamt zweckmäßigen Ausführung sind als Geschmacksparameter zumindest einer aus der Auswahl
- Bitterkeit (sauer-bitter);
- Stärke (stark schwach) und
- Körperfülle (vollmundig - blumig frisch)
vorgesehen. Das bedeutet, dass eine Achse die Bitterkeit, eine andere Achse die Stärke und eine weitere Achse die Körperfülle. Die Intensität des jeweiligen einzelnen Parameters wird durch die Position des Berührungspunktes auf der Fläche wischen zwei Achsen bestimmt. Dabei wird die lineare Projektion des Berührpunktes zur jeweiligen Achse als Auswahlwert für den der Achse zugeordneten Parameter. Beim Spinnennetzdiagramm erstrecken sich die Achsen sternförmig von einem Mittelpunkt aus, der den Minimalwert oder Nullwert markiert. Die äußeren Enden der Achsen repräsentieren jeweils den Maximalwert. Beispielsweise für die Achse, die die Bitterkeit repräsentiert, gibt die Achse am Zentralpunkt "sauer" an und am äußeren Ende "bitter". Entsprechendes gilt für die anderen Geschmacksparameter.

In einer insgesamt vorteilhaften Ausführung umfasst der Heißgetränkebereiter zumindest zwei Vorratsbehälter für Kaffeebohnen und ein Dosiermittel zum Dosieren der Kaffeebohnen aus den einzelnen Vorratsbehältern zum Mahlwerk, um eine vorbestimmte Mengen Kaffeepulver aus den einzelnen Vorratsbehältern der Brühkammer zuzuführen zum Zubereiten eines einzelnen Getränks, wobei die jeweils zuzuführenden Mengen von der Steuereinrichtung bestimmbar sind. Die Bedien- und Anzeigevorrichtung ist hierbei dazu eingerichtet, für jede Bohnensorte jeweils ein Spinnennetzdiagramm darzustellen, die in der Ebene des Displays hintereinanderliegend dargestellt und einzeln aktivierbar sind. Hierbei können Geschmacksparameter erreicht werden, die mit einer einzelnen Bohnensorte nicht erreichbar ist. Beispielsweise kann "sauer" mit "bitter" so kombiniert werden, dass beide Geschmacksnoten intensiv zur Entfaltung kommen. Bei Verwendung einer einzigen Bohnensorte ist in der Regel entweder nur "sauer" oder nur "bitter" in hoher Intensität für das Getränk bereitzustellen.

Für die Umsetzung der Benutzereingabe in Getränkeparameter bzw. Brühparameter umfasst die Steuereinrichtung eine Tabelle, mathematisches Modell oder eine Berechnungsformel umfasst, um anhand der eingegebenen Geschmacksparameter die entsprechend resultierenden Brühparameter zur nachfolgenden Steuerung der Aktoren bereitzustellen. Die Getränkeparameter bzw. den Brühparameter beinhalten die Vorgaben zur Steuerung oder Aktivierung der Pumpe, Heizeinrichtung, des Mahlwerks und gegebenenfalls der Zuführeinrichtung zum Zuführen verschiedener Kaffeesorten in die Brühkammer.

In einer insgesamt zweckmäßigen Ausführung ist die Bedien- und Anzeigevorrichtung dazu eingerichtet, für mehrere, zweckmäßigerweise eine begrenzte Anzahl von verschiedenen Bohnensorten das jeweilige Spinnennetzdiagramm vorzuhalten und aufgrund einer Initialisierung ein ausgewähltes Spinnennetzdiagramm für die nachfolgende Geschmacksauswahl zu aktivieren. Insgesamt ist es wichtig, dass die verwendete bzw. in den Vorratsbehälter eingefüllte Bohnensorte der Bedien-und Anzeigevorrichtung bzw. der Steuereinrichtung angegeben wird, damit aufgrund dieser Information das dazugehörige Spinnennetzdiagramm aufgerufen, erzeugt oder zur Bedien-und Anzeigevorrichtung aus einer externen Quelle übertragen werden kann. Die Steuervorrichtung kann dazu für mehrere, zweckmäßigerweise eine begrenzte Anzahl von verschiedenen Bohnensorten das jeweilige Spinnennetzdiagramm vorhalten, wobei nachträglich Veränderungen oder Übertragungen im Zuge von Updates oder manuellen Eingabe in einer Betriebsart zur Initialisierung möglich sind.

In einer insgesamt vorteilhaften Weiterbildung umfasst die Steuereinrichtung eine Kommunikationsschnittstelle und ist dazu ausgebildet, eine zu aktivierende Kaffeesorte an eine externe Datenverarbeitungseinheit zu übertragen, um als Antwort das zu der zu aktivierenden Kaffeesorte zugeordnete Spinnennetzdiagramm zu empfangen. Damit werden nur die für den Benutzer relevanten Datensätze in der Steuereinrichtung gespeichert, sodass der Speicher nicht mit nicht benutzten Datensätzen belastet wird.

In einer weiteren, insgesamt zweckmäßigen Ausführung umfasst die Steuereinrichtung ein Datenübertragungsmittel zum Senden der ausgewählten Geschmacksparameter an eine entfernte Datenverarbeitungseinheit und zum Empfangen von dazugehörigen Brühparametern wobei die Steuereinrichtung dazu ausgebildet ist, aufgrund der empfangenen Brühparameter die dazu korrespondierende Pumpenleistung bzw. Durchflussgeschwindigkeit für die nachfolgende Getränkezubereitung entsprechend einzustellen. Damit werden die Mittel zur Bewertung der Eingabeinformationen ausgelagert an einen externen Server oder Cloud, sodass die Steuereinrichtung bzw. der Speicher der Steuereinrichtung nicht mit den dafür notwendigen Daten belastet wird. In einer insgesamt zweckmäßigen Ausführung des Systems umfasst die externe Datenverarbeitungseinheit eine Tabelle, mathematisches Modell oder eine Berechnungsformel umfasst, um anhand der Eingabeinformationen die entsprechenden Brühparameter zu erzeugen. Die externe Datenverarbeitungseinheit sendet nach dem Erstellen der Brühparameter diese an die anfordernde Steuereinrichtung. Zur Datenübertragung kann beispielsweise Internet, WLAN oder ein Telecom-Standard verwendet werden.

In einer insgesamt zweckmäßigen Ausführung umfasst der Heißgetränkebereiter eine der Steuereinrichtung zugeordnete Kommunikationsschnittstelle und ein externes Gerät als Bediengerät für den Getränkebereiter, wobei die das externe Gerät die Bedien- und Anzeigevorrichtung und eine Kommunikationsschnittstelle umfasst, wobei die Kommunikationsschnittstellen dazu ausgebildet sind, in Kommunikationsverbindung zu treten, um die Benutzereingaben vom externen Gerät zur Steuereinrichtung zu übertragen. Als externes Bediengerät kann dabei bevorzugt ein Smartphone, Tablet oder ein PC fungieren, der mit einem Berührbildschirm zur Eingabe von Eingabeinformationen ausgestattet ist. Zur Datenübertragung kann WLAN, NFC Bluetooth oder eine drahtgebundene Datenverbindung verwendet werden.

Ein Ausführungsbeispiel der Erfindung ist in den Zeichnungen rein schematisch dargestellt und wird nachfolgend näher beschrieben. Es zeigen
- Fig. 1:: einen Heißgetränkebereiter in einer teilweise schematischen Schnittdarstellung;
- Fig. 2:: einen vereinfachten Schaltplan des Strömungsleitungssystems;
- Fig. 3, 4:: ein Display schematisch mit Spinnennetzdiagrammen in verschiedenen Ansichten;
- Fig. 5:: ein Display schematische mit einem Spinnennetzdiagramm als Körper und
- Fig. 6:: ein System mit Getränkebereiter, externem Gerät und entferner Datenverarbeitungseinheit.

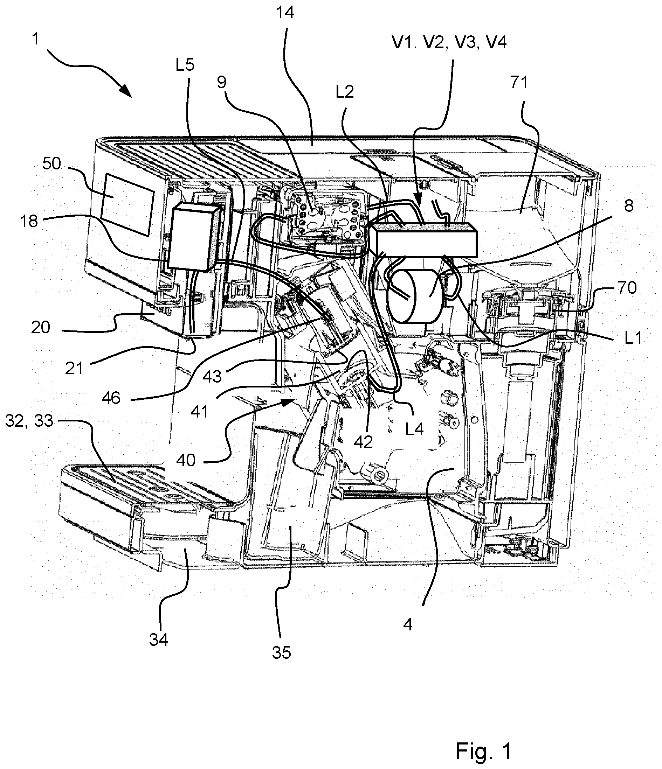

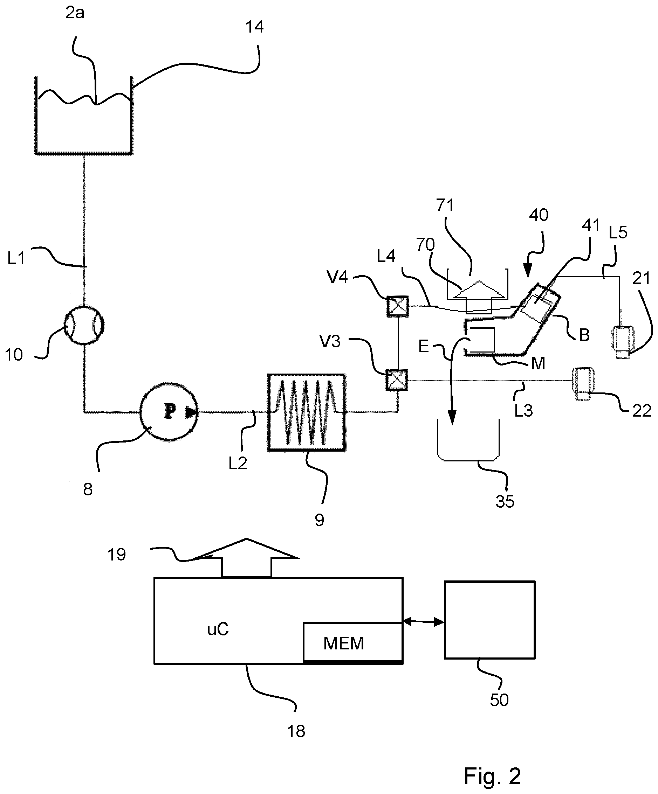

Die Fig.1 zeigt am Beispiel eines als Standgerät ausgebildeten Heißgetränkebereiter 1 mit allen relevanten Komponenten für die Zubereitung eines Heißgetränks. Der Getränkebereiter 1 umfasst unter anderem ein Gehäuse 11, in dem der Vorratsbehälter 71 für Kaffeebohnen mit darunter angebrachtem Mahlwerk 70 mit Motor, den Wasserbehälter 14 sowie die Möglichkeit, der Unterbringung des Strömungsleitungssystems 2. Im Frontbereich des Heißgetränkebereiter 1 verfügt dieser über einen höhenbeweglichen Auslass 20, in dem mehrere Entnahmeeinrichtungen, hier Auslassdüsen 21, 22 untergebracht sind. Bei der Entnahmeeinrichtung 22 handelt es sich im vorliegenden Fall um eine Dampfdüse zur Abgabe heißen Wasserdampfes oder heißem Wasser, beispielsweise zur Verdünnung eines fertigen Kaffees oder zur Zubereitung eines Teegetränks. Die Entnahmeeinrichtung 21 stellt eine Ausgabeleitung oder Ausgabedüse 21 zur Abgabe von Kaffeegetränken dar. Eine Brüheinheit 40 mit einer Brühkammer 41 im Inneren des Gerätes 1 dient zur Zubereitung des Getränkes, wobei in die Brühkammer 41 das Kaffeepulver eingebracht und anschließend mit heißem Wasser durchflutet wird, sodass zur Ausgabeleitung und durch die Ausgabedüse 21 das fertige Kaffeegetränk ausgegeben wird. Bei dieser Ausführung sind die Ausgabedüsen 21, 22 in der Höhe verschiebbar angeordnet, so dass sie der Höhe eines auf der Abstellfläche 33 abgestellten Trinkgefäßes angepasst werden kann, ohne dass bei der Abgabe des Getränkes ein Verspritzen erfolgt. Den oberen Abschluss der Abstellfläche 33 bildet ein Abtropfblech 32, das mit Öffnungen und Schlitzen versehen ist, um Flüssigkeitsreste in einer unterhalb des Abtropfbleches 32 vorhandenen Auffangschale 34 abzuführen. Ferner umfasst der Heißgetränkebereiter 1 einen Tresterbehälter 35, in den die aufgebrauchte Substanz, beispielsweise Kaffeekuchen, nach Vollendung der Getränkezubereitung hineingeworfen wird. Das Gerät 1 umfasst ferner eine Steuereinrichtung 18, die dazu eingerichtet ist, die einzelnen Funktionsbaugruppen, wie Pumpe 8, Ventilanordnung V und Heizeinrichtung 9 und Mahlwerk 70, soweit vorhanden, zu steuern, wie es für die Zubereitung des jeweils ausgewählten Getränkes notwendig ist. Die Steuereinrichtung 18, die als Mikrocontroller uC mit einem zugeordneten Speicher MEM ausgeführt ist (Fig. 2), ist in dieser Ausführung ferner dazu eingerichtet, die Ventilanordnung V des Strömungsleitungssystems 2 so anzusteuern, dass das heiße Wasser durch die Brühkammer 41, gepumpt wird. Außenseitig an der Frontwand des Gehäuses 11 ist die Bedien- und Anzeigevorrichtung 50 angeordnet, in diesem Beispiel ist sie als Berührbildschirm 51 mit einem Display und einer berührsensitiven Oberfläche ausgebildet, um Eingaben bezüglich der Getränkeauswahl und zusätzliche Einstellungen hinsichtlich Wassermenge, Geschmack Stärke oder Bohnensorte bereitzustellen. Die Bedien- und Anzeigevorrichtung 50 steht dabei datentechnisch mit der Steuereinrichtung 18 bzw. mit dem dort vorhandenem Mikroprozessor uC in Verbindung (Fig. 2)

Fig. 2 zeigt einen vereinfachten Schaltplan eines Strömungsleitungssystems 2 innerhalb eines Getränkeautomaten 1. Von einer Wasserquelle 14, in diesem Beispiel ein Wassertank, wird das Strömungsleitungssystem 2 mit frischem Wasser versorgt. Das Strömungsleitungssystem 2 umfasst dabei Leitungsabschnitte und Komponenten, die zur Zubereitung von Getränken dienen. Zur Erzeugung der Strömung innerhalb des Strömungsleitungssystems 2 sowie des erforderlichen Druckaufbaus dient eine Pumpe 8. Darüber hinaus weist der zur Zubereitung der Getränke genutzte Teil des Strömungsleitungssystems 2 eine Heizeinrichtung 9 zur Erwärmung des Wassers 2a sowie mehrere Entnahmeeinrichtungen 21, 22, sowie Leitungsabschnitte L1, L2, L3, L3 zur Verbindung der einzelnen Komponenten miteinander auf, wobei die Dampfdüse 22 zur Ausgabe von Dampf und zur Ausgabe von heißem Wasser und/oder die Kaffeedüse 21 zur Ausgabe des zubereiteten Kaffeegetränkes oder Teegetränkes, je nachdem, welches Pulver oder Substrat der Brühkammer 41 zugeführt wurde, vorgesehen ist. Zur selektiven Ansteuerung der Entnahmeeinrichtungen 21, 22 dienen die Mehrwegeventile V3 und V4 der Ventilanordnung V, die den Entnahmeeinrichtungen 21, bzw. der Brühkammer 41 in Strömungsrichtung betrachtet vorgeschaltet sind. Darüber hinaus kann das Strömungsleitungssystem 2 ein Messgerät zur Volumenstrommessung, das als Flowmeter 10 bezeichnet wird, aufweisen, das hilfreich ist, um eine genaue Menge frischen Wassers zu bestimmen, die für die Zubereitung eines Getränkes erforderlich ist. Darüber hinaus lässt sich mit einer derartigen Messeinrichtung 10 auch die Anzahl der hergestellten Getränke bestimmen.

Die Steuereinrichtung 18 mit einem Mikrocontroller uC und einer Speichereinrichtung MEM dient zur Durchführung einer Getränkezubereitung, wobei hierbei die Aktivierung der Heizeinrichtung 9, der Ventilanordnung V bzw. der Ventile V1, V2, V3 und V4 sowie der Pumpe 8, der Brühkammer 40 und bedarfsweise weiteren Komponenten, wie einem Mahlwerk 70 durch entsprechende Signalverbindungen 31 erfolgt. In Fig. 2 ist die Signalverbindung 19 zum Motor der Pumpe 8 und zu den anderen, zu steuernden Komponenten grob skizziert.

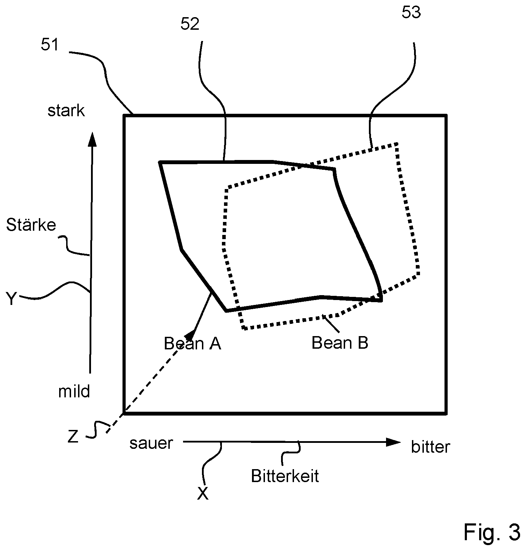

In Fig. 3 ist beispielhaft der Berührbildschirm 51 dargestellt. Hier werden dem Benutzer die zu erreichenden Geschmacksergebnisse als Spinnennetzdiagramm ausgegeben. Im dargestellten Beispiel befindet sich das Spinnennetzdiagramm 52 in einem 2-dimensionalen Koordinatensystem, wobei in der X-Achse die Bitterkeit und in der Y-Achse die Kaffeestärke dargestellt sind. In der von den beiden Achsen aufgespannten Fläche ist das Spinnennetzdiagramm 52 dargestellt, dessen Umrisslinie die Grenze für den maximal erreichbaren Wert des jeweiligen Geschmacksparameters angibt. Innerhalb der Umrisslinie können alle Geschmacksnuancen erreicht werden. Das Diagramm bildet den sogenannten Geschmacksumfang für eine einzige Bohnensorte oder einem Bohnengemisch mit unveränderlichem Mischungsverhältnis ab. Die durchgezogene Umrisslinie 52 repräsentiert den Geschmacksumfang für eine erste Bohnensorte Bean A, beispielsweise "Arabica", die gestrichelte Umrisslinie 53 repräsentiert den Geschmacksumfang für eine zweite Bohnensorte Bean B, beispielsweise "Robusta".

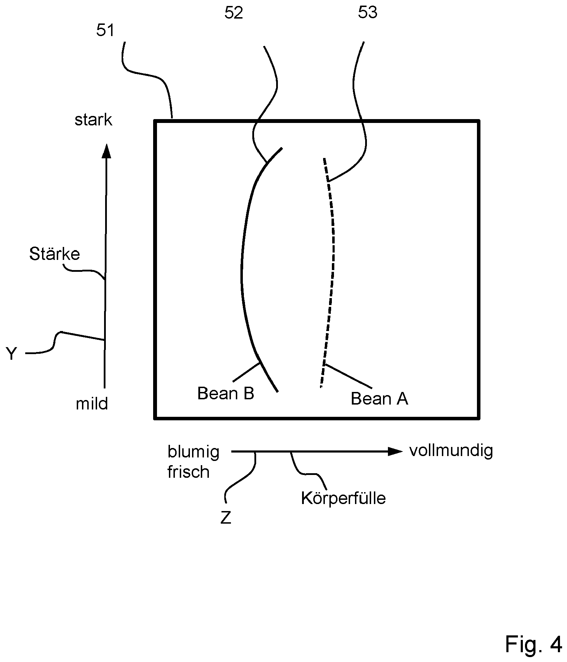

Fig. 4 zeigt das Spinnennetzdiagramm 52, 53 um 90 Grad vertikal gedreht. Das Spinnennetzdiagramm 52, 53 befindet sich in einem 2-dimensionalen Koordinatensystem, wobei in der X-Achse den Körper und in der Y-Achse die Kaffeestärke dargestellt sind. In der von den beiden Umrisslinien der dargestellten Spinnennetzdiagramme 52, 53, dessen Linie jeweils die Grenze für den gesamtheitlich erreichbaren Wert angibt. Wenn ein Geschmacksparameter in der Fläche zwischen den Grenzlinien 52, 53 ausgewählt wird, so ist eine Mischung von Bean A mit Bean B notwendig, weil ohne Mischung nur Werte für den Parameter Stärke und Körper möglich sind, wie sie mit den Grenzlinien 52, 53 angegeben sind.

Dies ist jedoch nur beispielhaft erläutert. In einer zweckmäßigen Ausführung kann das Spinnennetz umlaufend abgebildet sein, mit dem Nullpinkt im Zentrum und den Extremwerten jeweils in den äußeren Ecken. Ferner kann das Konstrukt aus Umrisslinien als 3-D-Darstellung ausgeführt sein, sodass das Diagramm als 3-D Körper in perspektivischer Ansicht auf dem Berührbildschirm 51 dargestellt wird. Hierzu finden entsprechend Eingabemöglichkeiten mittels Wischgesten Verwendung.

Mit der genannten Möglichkeit wird dem Benutzer auf übersichtliche Art und Weise eine Vielzahl von Einstellungen und nuancierten Parametrierungen gegeben, ohne ihn zu überfordern oder Expertenwissen zu verlangen. Ferner wird dem Benutzer plakativ dargestellt, welches Geschmackspotential seine verwendete Bohnensorte bietet. Als weiterer Vorteil ist zu nennen, dass die durchgeführten Einstellungen in der Steuereinrichtung 18 gespeichert werden können, damit sie für weitere nachfolgende Zubereitungen ausgerufen werden können, ohne Durchführung einer erneuten Geschmacksauswahl. Das Diagramm kann auch als Geschmackslandkarte bezeichnet werden, wobei Punkte innerhalb der Umrisslinie die Geschmacksorte bilden. Die Geschmacksorte werden also vom Bediener durch Berührung der dem gewünschten Geschmacksergebnis zugeordneten Stelle im Diagramm ausgewählt. Auch mehrdimensionale Darstellungen in Verbindung mit entsprechenden Erfassungsmethoden zur Benutzereingaben können verwendet werden.

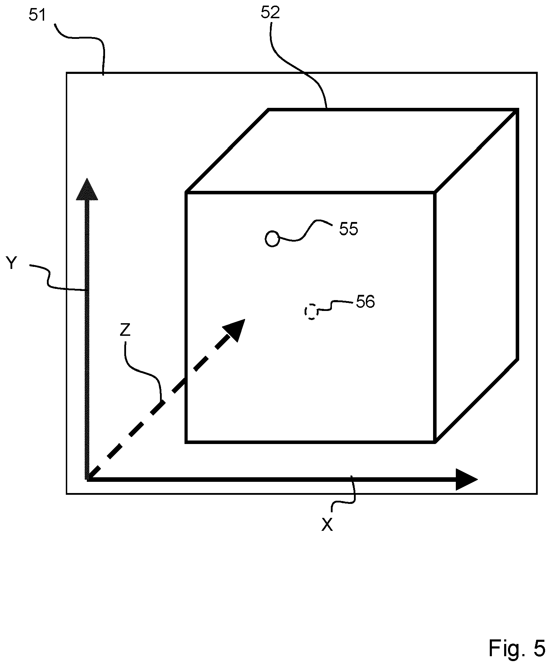

Fig. 5 zeigt den Berührbildschirm 51 mit einer Darstellung des Diagramms 52 als dreidimensionaler Körper, sodass ein 3-D Eindruck dem Anwender vermittelt wird. Die Achsen X, Y, Z sind dabei beispielsweise nach Geschmacksattributen wie folgt zugeordnet:
X-Achse: sauer - ausgewogen - bitter
Y-Achse: stark - rund - mild
Z-Achse: Starker Köper - Balance - fruchtige Leichtigkeit

Die Achsen können nach Attributen mit konkreten Geschmacks- oder Aromazuschreibungen ausgelegt werden, beispielsweise:
Tropisch - nussig
Mandel - cremig.

Ferner können andere Attribute mit den Achsen abgebildet werden, beispielsweise nach Kafeesorte:
X-Achse ist Fach 1 zugeordnet: Fach 1 beinhaltet Hybrid (Arabica)
Y-Achse ist Fach 2 zugeordnet: Fach 2 beinhaltet Pacas (Arabica Bourbon)
Z-Achse ist Fach 3 zugeordnet: Fach 3 beinhaltet Tupi (Robusta)

Diese Einstellung auf einer der Achsen kann für die jeweils in den einzelnen Fächern eingefüllten Bohnensorten erfolgen. Dies setzt voraus, dass der Getränkebereiter zumindest 3 Vorratsbehälter für Bohnen umfasst. Ferner ist ein Dosiermittel vorhanden, um einzelne Anteile der Brühkammer 41 zuzuführen.

Für alle Varianten gilt, dass jedem Punkt im Spinnennetzdiagram jeweils entsprechende Brühparameter, unter anderem
- Bohnensorten/Zutatensorten und Anteile (Rezeptur)
- Mahlgrade und Mahlmengen
- Durchflussgeschwindigkeit
- Temperatur, Brühprofil wie Vorbrühen, Durchflussgeschwindigkeitsrampen, Druck, Anpressdruck
zugeordnet sind.

In Fig. 5 ist der ausgewählte Geschmacksort 55 als Kreisfläche skizziert. Diese befindet sich im inneren des körperförmigen Diagramms 52. Der skizzierte Geschmacksort kann beispielsweise folgende Brühparameter zur Folge haben:
Temperatur niedrig; Menge Bean_A: 80%, Mahlgrad 3; Menge Bean_B: 20%, Mahlgrad 3.

In einer bevorzugten Weiterbildung können die an diesem Ort befindlichen Attribute bzw. Geschmacksparameter angezeigt werden, bevorzugt in Textform, ähnlich einer Sprechblase. So wird vor der Auswahl nochmal bestätigt, welche Getränkeattribute ausgewählt werden, selbst wenn eine andere Ebenauswahl der Achsen gerade aktiv ist.

Für einen anderen Geschmacksort 56 können beispielsweise folgende Brühparameter zugeordnet sein:
Temperatur hoch; Menge Bean_A: 90%, Mahlgrad 3; Menge Bean_B: 10%, Mahlgrad 2.

Hinter der linearen bzw. kontinuierlichen Darstellung des Geschmacksraumes können nichtlineare Prozesse liegen oder diskrete Parameter (diskrete Stufen wie Mahlgradstufe oder Temperaturbereich). Dies gilt für alle Ausführungen.

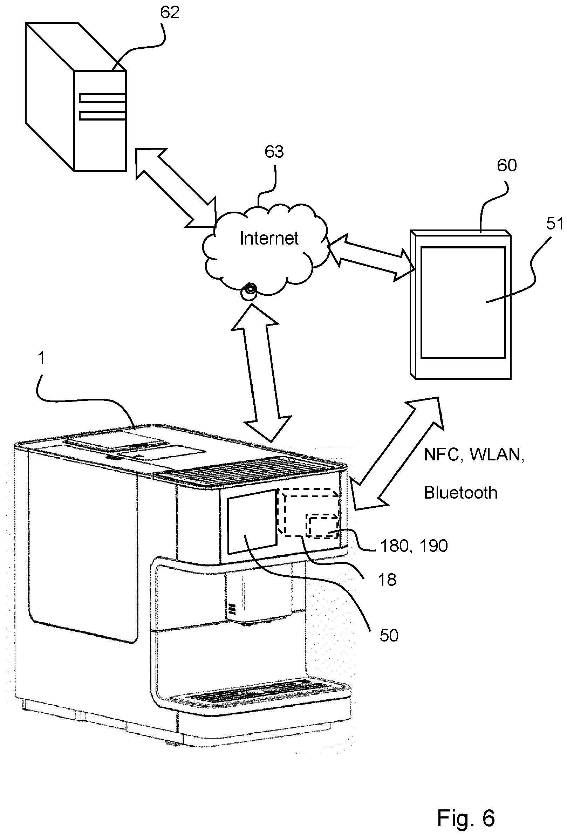

Fig. 6 zeigt schematisch ein System, umfassend einen Heißgetränkebereiter 1 mit einer Steuereinrichtung 18, einem externen Bediengerät 60 und einer entfernten Datenverarbeitungseinheit oder Server 62. Mit dem externen Gerät 60, wie einem Smartphone, können mittels des Berührbildschirms 51 Eingaben zur Bedienung des Getränkebereiters 1 getätigt werden. Ferner können Parametrierungen vorgenommen werden, die die Kaffeesorte, das Geschmackserlebnis. In einer bevorzugten Ausführung werden diese Informationen mittels Netzwerk 63, beispielsweise Internet oder Mobilfunk an den entfernten Server 62 gesendet. Dieser berechnet daraus die für den Brühprozess benötigten Brühparameter, um das angeforderte Ergebnis zu erhalten. Das externe Gerät 60 steht wiederrum mit der Steuereinrichtung 18 des Getränkebereiters 1 in Kommunikationsverbindung, um den vom entfernten Server 62 empfangenen Wert an die Schnittstelle 20 der Steuereinrichtung 18 zu übertragen. Die Steuereinrichtung 18 aktiviert anschließend die Pumpe 8, die Heizeinrichtung 9 und die Ventilanordnung V und das als Mahlwerk 70, mit den in den Brühparametern enthaltenen Vorgaben für den anschließend gestarteten Brühvorgang. Das Mahlwerk dient hierbei auch als Dosiermittel, mit dem die angeforderte Menge an Kaffeemehl der Brühkammer 41 zugeführt wird.

Das externe Gerät 60 kann in einer bevorzugten Ausführung als Bediengerät des Getränkebereiters 1 fungieren, wobei es die eingegebenen Geschmacksparameter an die Steuereinrichtung 18 überträgt. In einer vorteilhaften Ausführung kann das externe Gerät 60 eine Vorverarbeitung durchführen, indem es die eingegebenen Geschmacksparameter in Brühparameter für die entsprechend der im Gerät 1 bevorrateten Kaffeesorten berechnet. Danach überträgt das externe Gerät 60 die Brühparameter an die Steuereinrichtung 18 (Fig. 1, 2), die damit die Aktoren entsprechend ansteuern kann. Der Getränkebereiter 1 und die Steuereinrichtung 18 können in dieser Ausführung sehr einfach gehalten werden, weil die aufwändige grafische Darstellung und die Parameterumrechnung im externen Gerät 60 erfolgt. Im Extremfall kann die Bedien- und Anzeigevorrichtung im Getränkebereiter 1 entfallen, weil diese Aufgaben in das externe Gerät 60 ausgelagert sind.

In einer anderen oder weiteren Ausführung werden die Geschmacksparameter mittels der am oder im Gerät 1 befindlichen Bedieneinrichtung 50 eingegeben. Diese 50 oder die Steuereinrichtung 18 sendet mittels Schnittstellenmittels 180 diese Eingabeinformationen an einen entfernten Server 62 ohne Zuhilfenahme eines externen Bediengerätes 60. Der externe Server 62 errechnet alle Brühparameter, die zur Steuerung der Aktoren im Gerät 1 herangezogen werden. Der Server sendet diese errechneten Brühparameter an die Steuereinrichtung 18, die nach dem Empfang der Brühparameter den Brühvorgang startet unter Zuhilfenahme der empfangenen Brühparameter.

Zur Datenübertragung zum und vom entfernten Server 62 werden Standardmittel 180 verwendet, beispielsweise Internet, Mobilfunkstandards. Für die Kurzstreckenübertragung zwischen externem Bediengerät 60 und Getränkebereiter 1 werden Standardübertragungsmittel 190 verwendet, beispielsweise Bluetooth, NFC, WLAN oder drahtgebundene Übertragungsmittel.

Insgesamt ist mit dem vorgenannten Getränkebereiter 1 sichergestellt, dass sich eine optimale vom Benutzer gewünschte Geschmacksentfaltung einstellt. Dies ist auch das Bestreben von anerkannten Baristi, sodass der genannte Getränkebereiter 1 das optimale Geschmackserlebnis für eine Vielzahl von Kaffeesorten, Brüharten und Röstungen bietet.

## Patentansprüche

1. Heißgetränkebereiter (1) mit einem Strömungsleitungssystem (2) mit
- einer Wasserquelle (14);
- einer Brüheinheit (40), wobei die Brüheinheit (40) eine Brühkammer (41) zur Aufnahme von aufzubrühendem Brühgut und einer Einlassleitung (L4) zum Einlassen von Brühwasser in die Brühkammer (41),
- eine Heizeinrichtung (9) zum Erhitzen des der Brühkammer (41) zugeführten Wassers
- eine Pumpe (8), die dazu ausgebildet ist, das Wasser aus der Quelle (14) zur Brühkammer (41) zu fördern,
- eine Steuereinrichtung (18) zur Aktivierung und Deaktivierung der genannten Aktoren zur Zubereitung eines ausgewählten Getränks,
- eine Bedien- und Anzeigevorrichtung (50) mit einem berührempfindlichen Display (51), auf dem ein Auswahlbereich eines Parameters angezeigt und mittels einer Berührung oder Berührgeste innerhalb des Auswahlbereichs eine gewünschte Einstellung des Parameters erfolgen kann, wobei die Steuereinrichtung (18) mit der Bedien- und Anzeigevorrichtung (50) in Verbindung steht, um aufgrund der Auswahl das Getränk zuzubereiten, wobei die Steuereinrichtung (18) dazu eingerichtet ist, die Pumpe (8), den Heizkörper (9) und die Ventilanordnung (V) zur Zubereitung des Getränks zu steuern in Abhängigkeit der eingestellten sensorischen Eigenschaften,
wobei die Bedien- und Anzeigevorrichtung (50) dazu ausgebildet ist, zur Einstellung der Parameter ein Spinnennetzdiagramm (52, 53) zur Anzeige von sensorischen Eigenschaften auf dem Display (51) auszugeben, und eine Berührung oder Geste innerhalb der Umrandung des Spinnennetzdiagramms (52, 53) als Auswahl für die sensorische Eigenschaft zu erfassen, **dadurch gekennzeichnet, dass** die Bedien- und Anzeigevorrichtung (50) dazu ausgebildet ist, mit dem Spinnennetzdiagramm (52, 53) die zu erreichenden Grenzen hinsichtlich vorbestimmter Geschmacksparameter für eine zu verwendeten Bohnensorte (Bean-A, Bean-B) anzuzeigen, innerhalb derer die Auswahl der Geschmacksparameter erfolgen kann.

2. Heißgetränkebereiter (1) nach Anspruch 1, ferner umfassend zumindest einen Vorratsbehälter (71) für Kaffeebohnen und ein Mahlwerk (70) zum Mahlen von Kaffeebohnen, um eine vorbestimmte Menge Kaffeepulver der Brühkammer (41) zuzuführen, wobei der Mahlgrad von der Steuereinrichtung (18) veränderbar ist,
**dadurch gekennzeichnet,**
**dass** die Steuereinrichtung (18) ferner dazu eingerichtet ist, die Menge und den Mahlgrad abhängig von den eingestellten sensorischen Eigenschaften einzustellen.

3. Heißgetränkebereiter (1) nach einem der Ansprüche 1 bis 2,
**dadurch gekennzeichnet,**
**dass** die Bedien- und Anzeigevorrichtung (50) dazu eingerichtet ist, das Spinnennetzdiagramm (52, 53) als Fläche auf dem Display (51) darzustellen, um eine Benutzereingabe für einen ersten Parameter in X- Richtung (Bitterkeit) und einen zweiten Parameter in Y-Richtung (Stärke) bereitzustellen.

4. Heißgetränkebereiter (1) nach einem der Ansprüche 1 bis 3,
**dadurch gekennzeichnet,**
**dass** die Bedien- und Anzeigevorrichtung (50) dazu eingerichtet ist, das Spinnennetzdiagramm (52, 53) als Räumliches Diagramm mit zusätzlich weiterem Parameter in Z-Richtung (Körperfülle) darzustellen, um einen dritten Parameter in Z-Richtung zu konfigurieren.

5. Heißgetränkebereiter (1) nach einem der Ansprüche 1 bis 4,
**dadurch gekennzeichnet,**
**dass** als Geschmacksparameter zumindest einer aus der Auswahl
- Bitterkeit (sauer-bitter);
- Stärke (stark schwach) und
- Körperfülle (vollmundig - blumig frisch)
vorgesehen ist 1 sind.

6. Heißgetränkebereiter (1) nach einem der Ansprüche 2 bis 5, ferner umfassend zumindest zwei Vorratsbehälter (71) für Kaffeebohnen und ein Dosiermittel () zum Dosieren der Kaffeebohnen aus den einzelnen Vorratsbehältern zum Mahlwerk (70), um eine vorbestimmte Mengen Kaffeepulver aus den einzelnen Vorratsbehältern der Brühkammer (41) zuzuführen zum Zubereiten eines einzelnen Getränks, wobei die jeweils zuzuführenden Mengen von der Steuereinrichtung () bestimmbar sind,
**dadurch gekennzeichnet,**
**dass** die Bedien- und Anzeigevorrichtung (50) dazu eingerichtet ist, für jede Bohnensorte (Bean-A, Bean-B) jeweils ein Spinnennetzdiagramm darzustellen (52, 53), die in der Ebene des Displays (51) hintereinander liegend dargestellt und einzeln aktivierbar sind.

7. Heißgetränkebereiter (1) nach einem der Ansprüche 1 bis 6,
**dadurch gekennzeichnet,**
**dass** die Steuereinrichtung (18) Tabelle, mathematisches Modell oder eine Berechnungsformel umfasst, um anhand der eingegebenen Geschmacksparameter die entsprechend resultierenden Brühparameter zur nachfolgenden Steuerung der Aktoren bereitzustellen.

8. Heißgetränkebereiter (1) nach einem der Ansprüche 1 bis 7,
**dadurch gekennzeichnet,**
**dass** die Steuereinrichtung (18) dazu eingerichtet ist, für mehrere Bohnensorten, zweckmäßigerweise eine begrenzte Anzahl von verschiedenen Bohnensorten, das jeweilige Spinnennetzdiagramm vorzuhalten und aufgrund einer Initialisierung ein ausgewähltes Spinnennetzdiagramm zur Aktivierung an die Bedien- und Anzeigevorrichtung (50) für die nachfolgende Geschmacksauswahl zu übertragen.

9. Heißgetränkebereiter (1) nach Anspruch 8,
**dadurch gekennzeichnet,**
**dass** die Steuereinrichtung (18) dazu ausgebildet ist, nachträglich Veränderungen, bevorzugt Übertragungen im Zuge von Updates oder manuellen Eingabe als Initialisierung einer zu verwendenden Bohnensorte zuzulassen.

10. Heißgetränkebereiter (1) nach Anspruch 8 oder 9,
**dadurch gekennzeichnet,**
**dass** die Steuereinrichtung (18) eine Kommunikationsschnittstelle (180) umfasst und dazu ausgebildet ist, eine zu aktivierende Kaffeesorte an eine externe Datenverarbeitungseinheit (62) zu übertragen, um als Antwort das zu der zu aktivierenden Kaffeesorte zugeordnete Spinnennetzdiagramm zu empfangen.

11. Heißgetränkebereiter (1) nach einem der Ansprüche 1 bis 10, ferner umfassend eine der Steuereinrichtung (18) zugeordnete Kommunikationsschnittstelle (190) und ein externes Gerät (60) als Bediengerät für den Getränkebereiter (1) wobei die das externe Gerät (60) die Bedien- und Anzeigevorrichtung und eine Kommunikationsschnittstelle umfasst, wobei die Kommunikationsschnittstellen (190) dazu ausgebildet sind, in Kommunikationsverbindung zu treten, um die Benutzereingaben vom externen Gerät (60) zur Steuereinrichtung (18) zu übertragen.

## Claims

1. Hot beverage maker (1) comprising a flow line system (2) having
- a water source (14);
- a brewing unit (40), the brewing unit (40) a brewing chamber (41) for receiving brewing material to be brewed and an inlet line (L4) for introducing brewing water into the brewing chamber (41),
- a heater (9) for heating the water supplied to the brewing chamber (41)
- a pump (8) designed to convey the water from the source (14) to the brewing chamber (41),
- a controller (18) for activating and deactivating said actuators for preparing a selected beverage,
- an operating and display device (50) having a touch-sensitive display (51) on which a selection region of a parameter is displayed and a desired setting of the parameter can take place by means of a touch or touch gesture within the selection region, the controller (18) being connected to the operating and display device (50) in order to prepare the beverage based on the selection, the controller (18) being designed to control the pump (8), the heating body (9) and the valve arrangement (V) so as to prepare the beverage in accordance with the set sensory properties,
the operating and display device (50) being designed to output a spin network diagram (52, 53) for displaying sensory properties on the display (51) for setting the parameters, and to detect a touch or gesture within the border of the spin network diagram (52, 53) as a selection for the sensory property,
**characterized in that**
the operating and display device (50) is designed to display, with the spin network diagram (52, 53), the limits to be achieved with respect to predetermined taste parameters for a type of bean (Bean A, Bean B) to be used, within which the selection of the taste parameters can take place.

2. Hot beverage maker (1) according to claim 1, further comprising at least one storage container (71) for coffee beans and a grinder (70) for grinding coffee beans in order to supply a predetermined amount of coffee powder to the brew chamber (41), the grinding degree being changeable by the controller (18), **characterized in that**
the controller (18) is further designed to adjust the quantity and the grinding degree in accordance with the set sensory properties.

3. Hot beverage maker (1) according to either of claims 1 and 2,
**characterized in that**
the operating and display device (50) is designed to depict the spin network diagram (52, 53) as a surface on the display (51) in order to provide a user input for a first parameter in the X direction (bitterness) and a second parameter in the Y direction (strength).

4. Hot beverage maker (1) according to any of claims 1 to 3,
**characterized in that**
the operating and display device (50) is designed to depict the spin network diagram (52, 53) as a spatial diagram having additional other parameters in the Z direction (body) in order to configure a third parameter in said Z direction.

5. Hot beverage maker (1) according to any of claims 1 to 4,
**characterized in that**
at least one of the following is provided as a taste parameter:
- bitterness (acidic-bitter);
- strength (strong-weak), and
- body (full bodied-floral fresh).

6. Hot beverage maker (1) according to any of claims 2 to 5, further comprising at least two storage containers (71) for coffee beans and a metering means () for metering the coffee beans out of the individual storage containers toward the grinder (70) in order to supply a predetermined quantities of coffee powder from the individual storage containers to the brewing chamber (41) in order to prepare an individual beverage, the respective amounts to be supplied being determinable by the controller (),
**characterized in that**
the operating and display device (50) is designed to depict a spin network diagram (52, 53) for each type of bean (Bean A, Bean B), which diagrams are shown one behind the other in the plane of the display (51) and can be activated individually.

7. Hot beverage maker (1) according to any of claims 1 to 6,
**characterized in that**
the controller (18) comprises a table, mathematical model or calculation formula to provide the corresponding resulting brewing parameters based on the inputted taste parameters to subsequently control the actuators.

8. Hot beverage maker (1) according to any of claims 1 to 7,
**characterized in that**
the controller (18) is configured to keep, for a plurality of types of bean, advantageously a limited number of different types of bean, the relevant spin network diagram, and to transmit, based on an initialization, a selected spin network diagram for activation to the operating and display device (50) for the subsequent taste selection.

9. Hot beverage maker (1) according to claim 8,
**characterized in that**
the controller (18) is designed to permit retroactive changes, preferably transmissions in the course of updates or manual input as initialization of a type of bean to be used.

10. Hot beverage maker (1) according to either claim 8 or claim 9,
**characterized in that**
the controller (18) comprises a communication interface (180) and is designed to transmit a type of coffee to be activated to an external data processing unit (62) in order to receive, as a response, the spin network diagram associated with the type of coffee to be activated.

11. Hot beverage maker (1) according to any of claims 1 to 10,
further comprising a communication interface (190) assigned to the controller (18) and an external appliance (60) as an operating device for the beverage maker (1), wherein the external appliance (60) comprises the operating and display device and a communication interface, wherein the communication interfaces (190) are designed to enter into communication connection in order to transmit the user inputs from the external appliance (60) to the controller (18).

## Revendications

1. Préparateur de boissons chaudes (1) comportant un système de conduite d'écoulement (2), comportant
- une source (14) d'eau ;
- une unité d'infusion (40), dans lequel l'unité d'infusion (40) une chambre d'infusion (41) permettant la réception d'un produit d'infusion à infuser et une conduite d'admission (L4) permettant l'admission d'eau d'infusion dans la chambre d'infusion (41),
- un organe de chauffage (9) permettant le chauffage de l'eau fournie à la chambre d'infusion (41)
- une pompe (8) conçue pour transporter l'eau de la source (14) à la chambre d'infusion (41),
- un organe de commande (18) permettant l'activation et la désactivation desdits composants pour la préparation d'une boisson sélectionnée,
- un dispositif de manipulation et d'affichage (50) comportant un écran (51) tactile sur lequel une zone de sélection d'un paramètre peut être affichée et un réglage souhaité du paramètre peut être effectué au moyen d'un toucher ou d'un geste dans la zone de sélection, dans lequel l'organe de commande (18) est en liaison avec le dispositif de manipulation et d'affichage (50) pour préparer la boisson sur la base de la sélection, dans lequel l'organe de commande (18) est configuré pour commander la pompe (8), le corps chauffant (9) et l'agencement de soupapes (V) pour la préparation de la boisson en fonction des propriétés sensorielles réglées, dans lequel
le dispositif de manipulation et d'affichage (50) est configuré, pour le réglage du paramètre, pour sortir un diagramme en toile d'araignée (52, 53) pour l'affichage de propriétés sensorielles sur l'écran (51) et pour détecter un toucher ou un geste dans la bordure du diagramme en toile d'araignée (52, 53) en tant que sélection pour la propriété sensorielle, **caractérisé en ce que**
le dispositif de manipulation et d'affichage (50) est configuré pour afficher, au moyen du diagramme en toile d'araignée (52, 53), les limites à atteindre en ce qui concerne des paramètres de goût prédéterminés pour une variété de grains (Bean-A, Bean-B) à utiliser, à l'intérieur desquelles limites la sélection des paramètres de goût peut être effectuée.

2. Préparateur de boissons chaudes (1) selon la revendication 1, comprenant en outre au moins un réservoir de stockage (71) pour des grains de café et un broyeur (70) permettant de broyer des grains de café afin d'acheminer une quantité prédéterminée de poudre de café à la chambre d'infusion (41), dans lequel le degré de broyage peut être modifié par l'organe de commande (18), **caractérisé en ce**
**que** l'organe de commande (18) est en outre configuré pour régler la quantité et le degré de broyage en fonction des propriétés sensorielles réglées.

3. Préparateur de boissons chaudes (1) selon l'une des revendications 1 à 2,
**caractérisé en ce**
**que** le dispositif de manipulation et d'affichage (50) est configuré pour représenter le diagramme en toile d'araignée (52, 53) sous forme de surface sur l'écran (51) afin de fournir une entrée utilisateur pour un premier paramètre dans la direction X (amertume) et un deuxième paramètre dans la direction Y (force).

4. Préparateur de boissons chaudes (1) selon l'une des revendications 1 à 3,
**caractérisé en ce**
**que** le dispositif de manipulation et d'affichage (50) est configuré pour représenter le diagramme en toile d'araignée (52, 53) sous forme de diagramme spatial comportant en outre d'autres paramètres dans la direction Z (intensité) afin de configurer un troisième paramètre dans la direction Z.

5. Préparateur de boissons chaudes (1) selon l'une des revendications 1 à 4,
**caractérisé en ce**
**que,** comme paramètre de goût, au moins un élément parmi la sélection suivante est prévu
- amertume (aigre-amer) ;
- force (fort faible) et
- intensité (corsé - frais et fleuri).

6. Préparateur de boissons chaudes (1) selon l'une des revendications 2 à 5, comprenant en outre au moins deux réservoirs de stockage (71) pour des grains de café et un moyen de dosage () permettant le dosage des grains de café à partir des réservoirs de stockage individuels vers le broyeur (70) afin d'acheminer une quantités prédéterminée de poudre de café à la chambre d'infusion (41) à partir des réservoirs de stockage individuels, pour la préparation d'une boisson individuelle, dans lequel les quantités à amener respectivement peuvent être déterminées par l'organe de commande (),
**caractérisé en ce**
**que** le dispositif de manipulation et d'affichage (50) est configuré pour représenter, pour chaque variété de grains (Bean-A, Bean-B), respectivement un diagramme en toile d'araignée (52, 53) qui sont représentés de manière à reposer les uns derrière les autres dans le plan de l'écran (51) et peuvent être activés individuellement.

7. Préparateur de boissons chaudes (1) selon l'une des revendications 1 à 6,
**caractérisé en ce**
**que** l'organe de commande (18) comprend un tableau, un modèle mathématique ou une formule de calcul pour fournir les paramètres d'infusion résultants correspondants en fonction des paramètres de goût entrés pour la commande ultérieure des composants.

8. Préparateur de boissons chaudes (1) selon l'une des revendications 1 à 7,
**caractérisé en ce**
**que** l'organe de commande (18) est configuré pour conserver, pour plusieurs variétés de grains, de manière avantageuse un nombre limité de variétés de grains différentes, le diagramme en toile d'araignée respectif et pour transmettre, sur la base d'une initialisation, un diagramme en toile d'araignée sélectionné pour l'activation au dispositif de manipulation et d'affichage (50) pour la sélection de goût suivante.

9. Préparateur de boissons chaudes (1) selon la revendication 8,
**caractérisé en ce**
**que** l'organe de commande (18) est configuré pour permettre des modifications ultérieures, de préférence des transmissions dans le cadre de mises à jour ou d'entrées manuelles en tant qu'initialisation d'une variété de grains à utiliser.

10. Préparateur de boissons chaudes (1) selon la revendication 8 ou 9,
**caractérisé en ce**
**que** l'organe de commande (18) comprend une interface de communication (180) et est configuré pour transmettre une variété de café à activer à une unité de traitement de données externe (62) afin de recevoir en réponse le diagramme en toile d'araignée associé à la variété de café à activer.

11. Préparateur de boissons chaudes (1) selon l'une des revendications 1 à 10,
comprenant en outre une interface de communication (190) associée à l'organe de commande (18) et un appareil externe (60) en tant qu'appareil de manipulation pour le préparateur de boissons (1), dans lequel l'appareil externe (60) comprend le dispositif de manipulation et d'affichage et une interface de communication, dans lequel les interfaces de communication (190) sont configurées pour entrer en liaison de communication afin de transmettre les entrées utilisateur de l'appareil externe (60) à l'organe de commande (18).
